# FASCICULE DE BREVET EUROPEEN

(11) **EP 2 563 652 B1**
(45) Date de publication et mention de la délivrance du brevet: **31.10.2018**
(21) Numéro de dépôt: 11723502.8
(22) Date de dépôt: 22.04.2011
(51) Int. Cl.: B64C 1/14

(54) **PROCÉDÉ D'ASSEMBLAGE D'ENCADREMENTS D'HUBLOTS SUR UN FUSELAGE, ENCADREMENT DE MISE EN OEUVRE ET FUSELAGE D'AÉRONEF ÉQUIPÉ DE TELS ENCADREMENTS**
VERFAHREN ZUM ZUSAMMENFÜGEN EINES RAHMENS MIT EINER STRUKTUR UND DADURCH ERLANGTE VERBINDUNG, INSBESONDERE RAHMEN UM EINE ÖFFNUNG IN EINEM FLUGZEUGRUMPF
METHOD FOR ASSEMBLING A FRAME WITH A STRUCTURE AND RESULTING ASSEMBLY, IN PARTICULAR FRAME AROUND AN OPENING IN AN AIRCRAFT FUSELAGE

(30) Priorité: 28.10.2010 FR 1058884; 30.04.2010 FR 1053362
(43) Date de publication de la demande: 06.03.2013
(73) Titulaire: Airbus Operations SAS, 31060 Toulouse (FR)
(72) Inventeur: MILLIERE, Jérôme, F-31490 Leguevin (FR)
(74) Mandataire: Gevers & Orès
(86) Numéro de dépôt international: PCT/FR2011/050939
(87) Numéro de publication internationale: WO 2011/135245

(56) Documents cités:
- WO-A1-83/01237
- WO-A1-2008/109217
- DE-A1-102005 058 749
- US-A1- 2005 042 410

## Description

L'invention concerne un procédé de montage d'encadrements d'hublots sur un fuselage d'aéronef comme support, un encadrement pour la mise en oeuvre de ce procédé, ainsi qu'un fuselage d'aéronef équipé de ces encadrements d'hublots.

Les aéronefs sont composés d'un fuselage, de forme pseudo-cylindrique, renforcé par des éléments raidisseurs, tels que des cadres et des lisses, de manière à résister aux contraintes mécaniques rencontrées pendant les différentes phases de vol, en particulier celles exercées par la pression.

Des ouvertures, en général de forme rectangulaire arrondie aux angles ou oblongue, sont pratiquées dans le fuselage pour monter des hublots de même forme, la transparence de ces hublots permettant aux passagers de visualiser l'environnement externe. Ces hublots sont solidaires, en extension de leur paroi latérale, d'encadrements de dimensions périphériques supérieures à celles des ouvertures réalisées dans les parois du fuselage pour accueillir les hublots. Cette configuration permet ainsi aux encadrements de prendre appui sur le fuselage en bénéficiant de la pression interne - sensiblement supérieure à la pression hors de l'aéronef pendant le vol, l'atmosphère interne étant pressurisée - pour réaliser une étanchéité « naturelle » des hublots sur le fuselage.

Des moyens de retenue fixés aux encadrements et des moyens de liaison mécanique entre les encadrements et la peau du fuselage, par vissage ou rivetage, visent à créer une intégrité mécanique entre l'encadrement et la peau du fuselage faisant participer l'encadrement à la tenue mécanique de l'ensemble. Cette configuration permet, de plus, d'assurer une étanchéité à l'air et à l'eau dans cette zone.

Ces encadrements doivent également pouvoir résister aux contraintes mécaniques exercées par la flexion du fuselage et la pressurisation appliquée aux hublots. De plus, le respect du profil aérodynamique de la peau externe du fuselage est à considérer dans l'intégration des hublots dans le fuselage.

Par ailleurs, on connaît :
- par le document DE 10 2005 058749, un hublot destiné à être intégré dans une ouverture appropriée prévue dans la peau extérieure d'un aéronef ;
- par le document US 2005/042410, un élément structurel renforcé particulier, destiné notamment à être installé sur un aéronef ; et
- par le document WO 2008/109217, une méthode d'installation d'un hublot à l'aide d'éléments de fixation à ressort.

L'invention vise à diminuer les coûts multiples de fabrication, d'assemblage, d'exploitation et d'entretien liés à ce type de montage, en réduisant notamment le temps de montage par une simplification du montage des hublots, tout en améliorant la qualité de l'installation, en particulier par une configuration adaptée de l'encadrement et une diminution du poids de l'installation.

Pour ce faire, l'invention prévoit une liaison particulière entre l'encadrement et la peau du fuselage selon une méthode d'assemblage spécifique permettant entre autres de s'affranchir d'une partie d'encadrement entre le bord d'ouverture le fuselage et le hublot.

Plus précisément, l'invention a pour objet un procédé d'assemblage d'encadrements sur un fuselage d'un aéronef selon la revendication 1, dans lequel des éléments de fuselage comportant une peau de fuselage, présentant une face interne et une face externe, des pièces d'encadrement sont rassemblées (en un même lieu) dans une phase d'approvisionnement. La peau et les encadrements sont constitués en matériaux composites à base de fibres de carbone. Ce matériau est respectivement dit cuit ou cru selon que la réticulation de la résine de la matrice du composite a été effectuée ou pas, la réticulation étant déclenchée par un cycle pression/ température propre au matériau utilisé.

Chaque encadrement présentant une paroi globalement en forme de couronne, un film de colle est injecté, dans une phase de préparation, en interface entre une face externe sensiblement plane de la couronne d'encadrement et la face interne de la peau selon des emplacements prédéfinis (dans cette peau). L'ensemble ainsi assemblé est introduit dans une enceinte, en général un autoclave, pour effectuer une phase de co-collage combinant le collage des encadrements et la cuisson de la peau dans des conditions de durée, de température et de pression déterminées, connues par exemple par la cocuisson des lisses précuites sur une peau crue en matériau composite.

Au sortir du co-collage, une phase d'usinage comporte la réalisation d'ouvertures d'hublots par découpage d'une portion annulaire de la couronne formée par l'encadrement et de la peau de fuselage liée à cette portion,
selon un profil complémentaire de celui d'hublots à monter, puis retrait de la matière découpée. Les pièces d'encadrement, collées à la peau au cours de l'opération précédemment décrite, sont alors de plus mécaniquement fixées à la peau de fuselage en regard avec un nombre limité d'éléments de fixation permettant de couvrir des cas de décollement. Ainsi, les hublots mis en place dans les ouvertures prennent appui sur la peau de fuselage. Une pièce de retenue d'hublot peut alors être fixée sur l'encadrement.

Ce procédé intègre avantageusement le co-collage des lisses sur la peau du fuselage dans les mêmes conditions de durée, de température et de pression. De plus, ce procédé peut s'adapter à tout type d'hublot et de fuselage.

L'invention vise également à permettre un maintien de l'encadrement de sorte que, à l'issue de la phase de préparation, le cadre puisse rester sur le support dans une position définie par un intervalle de tolérance prédéfini.

Pour procéder à l'installation des encadrements, des ouvertures appropriées sont d'abord réalisées dans le fuselage et chaque encadrement est positionné approximativement, dans une phase de positionnement, dans l'ouverture qui lui est dédiée à l'aide de zones de références - par exemple des avant-trous - situées sur la peau du fuselage et sur l'encadrement. Chaque hublot est ensuite installé dans l'assise formée par l'encadrement.

L'encadrement est ensuite fixé à la peau du fuselage par des moyens de rivetage ou vissage, en général sur deux rangées concentriques. Un nombre élevé d'éléments de fixation - boulons ou rivets - est alors requis, par exemple 72 ou 96 boulons.

De manière générale, quel que soit le type d'assemblage - par collage, par chauffage, par radiation, etc. - il existe une phase de positionnement de l'encadrement sur le support avant assemblage définitif du cadre sur ce support. Or un tel positionnement est réalisé à l'aide de moyens temporaires (repères, clous, cales, étais, etc.) - et parfois dans des conditions difficiles (encombrement, température, etc.) - qui ne permettent pas un maintien en position précis ni constant du cadre pendant cette phase.

En particulier, pour les encadrements d'hublots d'aéronef dans le cas d'une configuration ou les encadrements seraient fixés sur la peau par collage grâce à l'utilisation d'un film de colle interposé entre l'encadrement et la peau pendant le cycle de cuisson/collage, les encadrements précuits vont « flotter » sur le film de colle et leur position, en fin de cycle de cuisson, est alors imprécise et peut aller au-delà des tolérances prédéfinies.

Pour atteindre cet objectif de maintien de l'encadrement, l'invention prévoit un positionnement du cadre par un appui particulier.

Plus précisément, l'invention a également pour objet un procédé d'assemblage d'un encadrement sur la peau de fuselage d'un aéronef comme support donné, par l'application du procédé défini ci-dessus, dans lequel l'encadrement présente une face de paroi destinée à l'assemblage et un contour interne formé par cette paroi qui définit un orifice. Le procédé comporte, dans la phase de préparation, une phase de positionnement de l'encadrement sur le support suivie d'une phase de fixation de l'encadrement sur ce support. Dans la phase de positionnement, l'encadrement est placé dans un moule et un centreur est inséré, en appui contre son contour interne, dans l'orifice de l'encadrement fermé par le moule. Un film d'adhésif est inséré entre l'encadrement et le support destiné à l'assemblage. Le support est mis en contact avec la face d'assemblage de l'encadrement selon un emplacement référencé par le moule et le centreur est alors mis en liaison avec le support. Dans la phase de fixation, pendant laquelle le moule est retiré et l'encadrement solidarisé au support par le durcissement de l'adhésif, la position de l'encadrement par rapport au support reste figée par auto-centrage de l'encadrement sur le centreur lié au support.

Le maintien en position de l'encadrement sur le support pendant la phase de fixation permet alors de minimiser l'intervalle de tolérance de position.

De préférence, l'assemblage encadrement/support peut être soumis dans la phase de fixation, suivant la nature de l'adhésif, à un apport d'énergie qui transforme le film d'adhésif en un lien solidaire.

Selon un mode de réalisation particulier, l'encadrement est précuit et la phase de fixation consiste alors en un co-collage de l'encadrement et du support combinant le collage de l'encadrement et la cuisson du support dans des conditions de température et de pression définies en fonction des matériaux constituant l'encadrement, l'adhésif et le support. Avantageusement, le co-collage est effectué dans une enceinte de four, en général d'un autoclave

Une phase finale de découpage du support peut être avantageusement exécutée pour former une ouverture dans le support de sorte que cette ouverture soit entourée par l'encadrement. Cette ouverture peut présenter un contour qui complète le contour interne de l'encadrement. Le découpage peut simultanément évider le support et agrandir l'orifice de l'encadrement pour former un seul contour.

Le procédé s'applique plus particulièrement à l'encadrement d'ouvertures de fuselage d'un aéronef - telles que sorties annexes (câblage, matériel, sécurité, etc.), trappes et notamment trappes de train d'atterrissage, panneaux d'accès - et en particulier à l'encadrement d'hublots.

Pour toutes ces ouvertures, l'encadrement est en matériau composite, le support est constitué par la peau de fuselage de l'aéronef, également en matériau composite, et un cycle de co-collage pendant la phase de fixation combine le collage des encadrements, préalablement précuits, à l'aide d'un film adhésif et la cuisson de la peau dans des conditions de durée, de température et de pression déterminées, connues par exemple de la cocuisson de lisses de renfort précuites sur une peau crue en matériau composite.

Dans cette application, chaque gabarit permettant la mise en appui du contour interne de l'encadrement peut remplir tout l'orifice d'encadrement. La liaison entre le gabarit et la peau du fuselage est de préférence réalisée par harponnage.

Une phase finale de détourage du support est opérée pour former une ouverture souhaitée dans la peau en fonction du profil d'un accessoire à monter, un hublot ou tout autre accessoire (trappe, porte, bouchon, etc.), dans cette ouverture renforcée par l'encadrement. Le détourage évide la peau du fuselage ainsi que, de préférence, l'encadrement en regard selon un contour de préférence plus large que le contour interne initial de l'encadrement, de sorte à définir une ouverture adaptée à l'accessoire à monter. En outre la phase de détourage permet d'enlever la zone dans laquelle les harpons sont installés, zone qui peut présenter des défauts de qualité causés par les harpons.

L'invention se rapporte également à un fuselage selon la revendication 8 qui comporte une peau de fuselage, présentant une face interne et une face externe, des encadrements d'hublots et des lisses en matériaux composites. Les encadrements présentent une paroi globalement en forme de couronne ayant une face externe sensiblement plane collée sur la face interne de la peau. Et la peau de fuselage est découpée selon un profil qui épouse celui de l'hublot positionné en regard, les hublots venant alors en appui direct sur la peau à travers un joint de structure. De plus, les encadrements sont liés mécaniquement à la peau interne du fuselage (30i). Ils présentent en coupe une forme de « T », avec une barre de « T » formant en développement la couronne de face externe et un pied de « T » formant une avancée médiane de l'encadrement vers l'intérieur du fuselage.

D'autres aspects, caractéristiques et avantages de la présente invention apparaîtront à la lecture de la description détaillée qui suit, en référence aux figures annexées qui représentent, respectivement :
- la figure 1, une vue partielle en coupe et perspective d'un exemple d'encadrement sur peau de fuselage après la phase de co-collage et avant la phase de détourage ;
- la figure 2, un diagramme d'étapes illustrant les principales phases du procédé de montage selon l'invention ;
- la figure 3, une vue partielle en coupe et perspective d'un exemple d'encadrement sur peau de fuselage après la phase de détourage ;
- la figure 4, une vue supérieure d'un encadrement fixé en quinconce sur une peau de fuselage ;
- la figure 5, une vue en coupe et perspective d'un exemple de fuselage selon l'invention équipé d'un hublot monté en liaison avec un encadrement ;
- la figure 6, une vue en coupe schématique partielle d'un exemple d'assemblage d'un encadrement d'hublot sur une peau de fuselage d'aéronef en phase de positionnement du procédé selon l'invention ;
- la figure 7, une même vue de l'exemple précédent en phase de fixation, et
- la figure 8, une même vue de l'exemple précédent après découpage de l'ouverture souhaitée.

Dans tout le présent texte, le qualificatif « latéral », « latéralement » ou équivalent se rapporte aux parois de contour des éléments cités - hublot, joint, encadrement -. Les expressions de type « interne » et « externe » ou équivalents se rapportent à des faces d'éléments tournés vers le côté intérieur « IN » et, respectivement, vers le côté extérieur « EX ». Le fuselage d'un aéronef définit un espace interne INT et un espace externe EXT, hors du fuselage. Le présent texte définit des éléments internes et externes selon leur position respectivement dans les espaces INT et EXT.

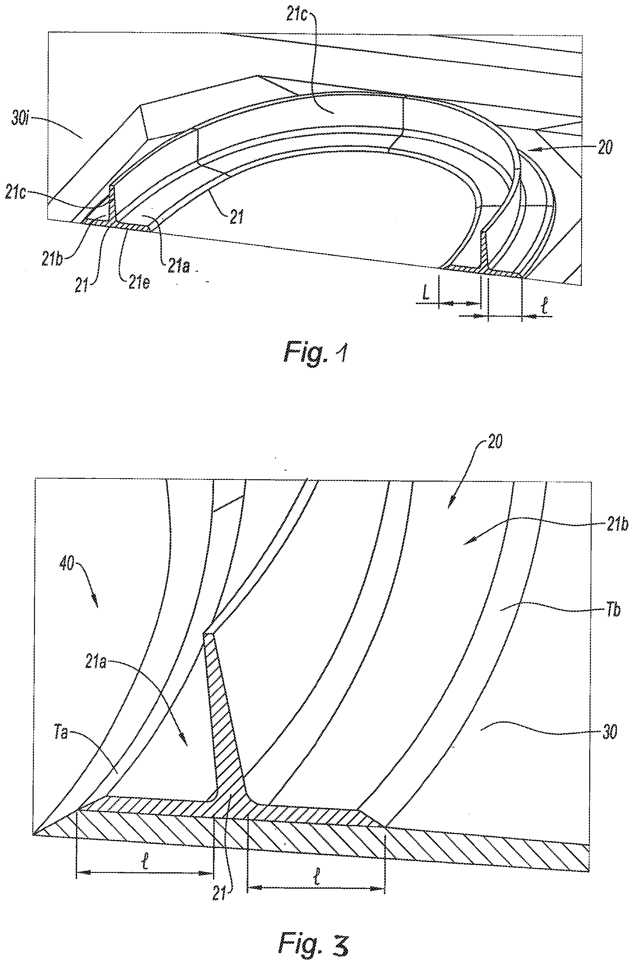

On a représenté à la figure 1, un encadrement 20 réalisé en matériau composite à base de fibres de carbone sur matrice de résine. Cet encadrement 20 présente, en coupe, une forme de « T » (« T » inversé dans le sens de lecture de la figure) comprenant une barre 21 du « T » formant une couronne dans le développement tridimensionnel de la pièce - une face externe 21e de cette couronne - et un pied 21c du « T » formant une avancée médiane de l'encadrement 20 à l'intérieur du fuselage, en position de montage. La couronne 21 possède deux portions de part et d'autre du pied 21c du « T », une portion centrale 21a, c'est-à-dire tournée vers le centre de la couronne, et une autre portion dite périphérique 21b. La portion centrale 21a présente une longueur « L » supérieure à celle « I » de la portion périphérique. Dans un exemple, le rapport « I/L vaut 75%.

Dans le présent texte, la qualification « centrale » se rapporte à un élément tourné vers un centre de couronne ou d'hublot, par opposition à la qualification « périphérique ».

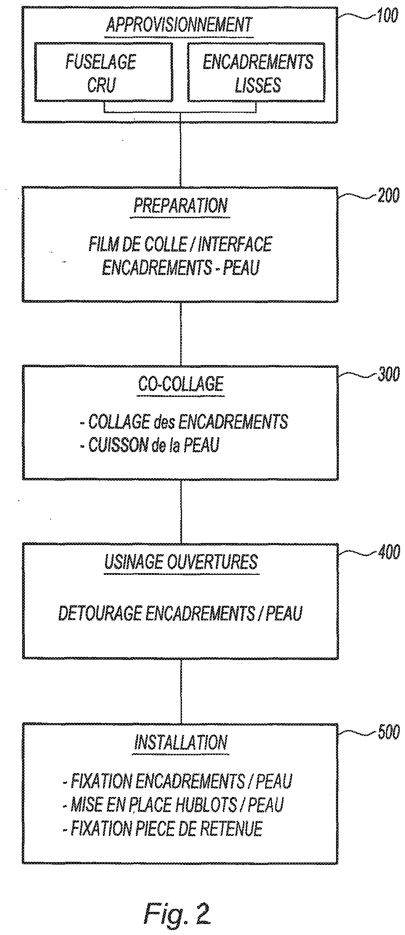

En référence maintenant au diagramme de la figure 2, une première étape d'approvisionnement 100 - selon le procédé de montage de l'invention - consiste à réunir en un même lieu, peaux de fuselage en matériau composite à base de fibres de carbone sur matrice de résine encore crues, c'est-à-dire dont la réticulation n'a pas été provoquée, et des encadrements 20 d'hublots ayant été « cuits », c'est-à-dire ayant déjà achevés leur réticulation dans des conditions de pression et de température appropriées au matériau composite...

Dans une phase de préparation 200 qui suit, un film de colle, par exemple de colle époxy, est injecté dans une interface formée entre la face externe sensiblement plane de chaque couronne 21 des encadrements 20 et la peau du fuselage selon des emplacements préalablement repérés.

L'ensemble ainsi assemblé est introduit dans un autoclave pour effectuer une phase de co-collage 300 combinant la cuisson de la peau et le collage des encadrements sur cette peau dans une seule phase.

Avantageusement, pour gagner en temps de préparation, le collage des lisses de renfort du fuselage - également en matériau composite cuit - est effectué concomitamment avec celle des pièces d'encadrement pendant la phase de co-colllage.

Les conditions de durée, de température et de pression de l'autoclave sont celles habituellement mises en oeuvre pour effectuer le collage des peaux de fuselage et des lisses de renfort. Par exemple, une montée en température entre 0.5 et 2.5°C par minute est prévue pour atteindre 180°C - avec un palier intermédiaire pendant environ 120 minutes - à la pression de l'ordre de 6 à 10 bars. Un autre palier de température de durée 120 minutes est respecté avant de descendre en température. La descente est contrôlée jusqu'à la température d'environ 50 à 70°C suivant une pente entre 1 et 3 °C par minute, avant le retour final à la température et pression ambiante.

A l'issue de cette phase de collage, les encadrements sont directement positionnés en leur emplacement définitif sur la peau, sans nécessiter d'opération additionnelle de calage et de positionnement. Les coûts et les temps de montage en sont d'autant réduits.

Après la phase de co-collage à l'autoclave, une phase d'usinage 400 comporte la réalisation d'ouvertures d'hublots par découpage de la portion centrale 21a de l'encadrement 20 et de la peau du fuselage en regard. La découpe est réalisée de sorte que le profil des ouvertures corresponde au profil complémentaire des hublots à installer. La matière ainsi découpée est retirée pour qu'apparaissent les ouvertures correspondantes.

Cette phase d'usinage permet de former des portions 21a et 21b de l'encadrement 20 de longueurs sensiblement égales. La figure 3 rend compte de cette opération qui libère les ouvertures 40 et égalise la longueur les portions 21a et 21b de la couronne 21 d'encadrement, ces longueurs étant préalablement calculées pour que, précisément, le déroutage aligne la longueur « L » de la portion 21a sur celle « I » de la portion 21b. Cette égalisation assure un bon équilibre d'assise des pièces d'encadrement sur la peau de fuselage, de part et d'autre du pied 21c de l'encadrement. L'extrémité Tb de la portion périphérique 21b de la barre 21 du « T » a été déjà biseautée par usinage au stade de la fabrication de l'encadrement (cf. figure 1), afin de réaliser sensiblement une continuité de profil avec la peau de fuselage environnante 30.

Les profils d'extrémité 30b de la peau 30 et de l'extrémité Ta de la portion 21a de l'encadrement 20 sont biseautées par détourage. Une telle découpe est réalisée selon un même angle - par exemple à l'aide d'un outil d'usinage 3D, 5 axes - pour que les ouvertures 40 puissent épouser les profils biseautés complémentaires des hublots.

Une phase d'installation finale 500 comporte alors la fixation mécanique des encadrements 20 à la peau de fuselage en regard.

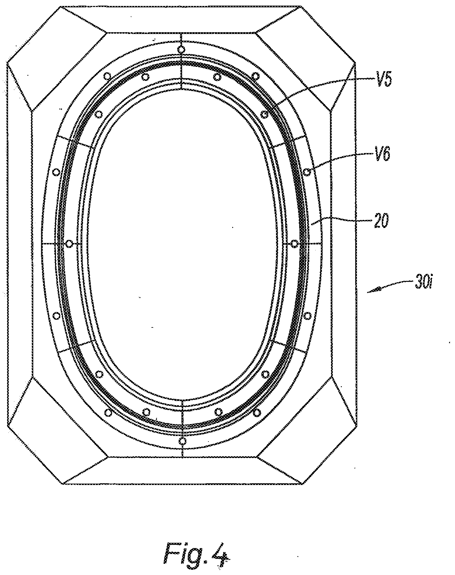

Chacune des portions 21a et 21b de la barre 21 de l'encadrement 20 est liée mécaniquement à la peau interne 30i en regard de sorte à former deux rangées de moyens de liaison entourant les hublots, des boulons V5 et V6 dans l'exemple illustré, de préférence selon une disposition en quinconce comme représenté. Le vissage est réalisé par des boulons en titane. Le nombre de boulons est sensiblement réduit par rapport à l'état de la technique - du fait de l'appui complet de l'encadrement sur le fuselage sans porte-à-faux et du collage efficace par le co-collage, et qu'une disposition en quinconce permet une répartition équilibrée autour des hublots. Par exemple, 20 boulons sont utilisés dans la vue supérieure de la figure 4 illustrant l'encadrement 20 fixé sur la peau interne 30i du fuselage avant mise en place d'hublot. L'utilisation d'un nombre réduit de boulons grâce à l'invention, par exemple entre 16 et 24, sans nuire à la qualité de la solidarisation, permet de réduire le temps et le coût de montage et d'alléger le fuselage, ce qui induit des gains en coûts d'exploitation et d'entretien.

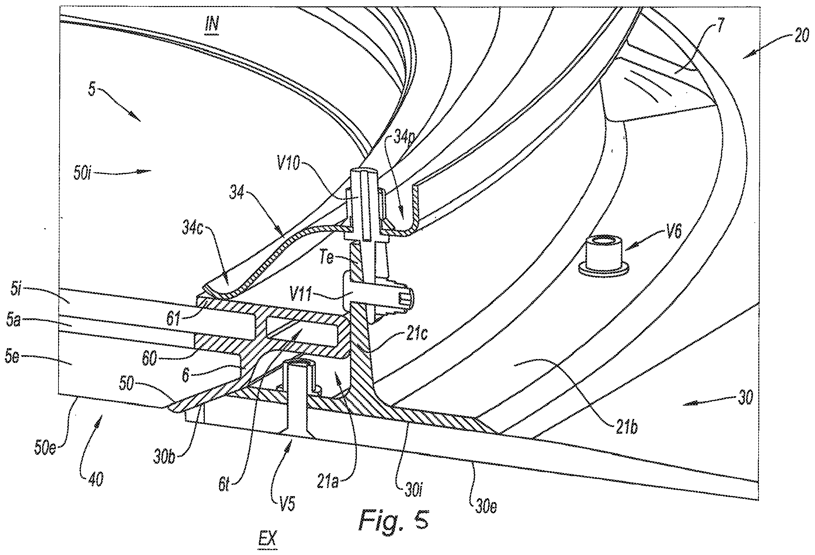

Les hublots 5 sont ensuite mis en place en prenant appui directement sur la peau de fuselage. La vue en coupe et perspective de la figure 5 illustre plus précisément un exemple de fuselage selon l'invention, équipé d'un hublot 5 monté en liaison avec l'encadrement 20.

Dans cet exemple, la face latérale 50 d'hublot 5 ainsi que les extrémités 30b de la peau de fuselage et Ta de l'encadrement ont des profils biseautés complémentaires. D'autres profils de réduction des dimensions d'hublot vers l'extérieur « EX » et de profils complémentaires de la peau de fuselage sont possibles : concaves, à angles droits selon une ou plusieurs marches, une combinaison de ces profils et/ou de profils biseautés. Chaque hublot 5 est constitué de deux plaques en plastique acrylique à haute résistance - ou en verre spécial - : une première plaque interne 5i, de profil sensiblement droit (perpendiculaire aux faces principales) et une deuxième plaque externe plus épaisse 5e, de profil biseauté formant la face 50, les deux plaques 5i et 5e étant séparées par une couche d'air 5a.

Comme décrit précédemment en référence à l'état de la technique, les plaques et couche d'hublot 5i - 5e - 5a ont été assemblées ensemble par un joint de structure 6. Plus précisément, le joint 6 s'insère dans la couche d'air 5a sur une couronne 60 - qui permet de calibrer le jeu d'épaisseur 5a entre les deux plaques - , sur une couronne 61 en bordure de la face principale interne 50i de la plaque interne 5i, ainsi que sur la face biseautée 50. Les profils d'extrémité de la peau 30 et de la portion 21a de l'encadrement 20 épousent le profil du joint 6 et de la face 50 d'hublot 5 après le détourage selon un même angle, comme décrit précédemment. La face externe 30e de la peau 30 est sensiblement alignée en vol sur la face externe 50e d'hublot 5. Pour ce faire, la face 50e est en léger retrait (comme représenté) au montage afin d'anticiper la déformation provoquée en vol par la pressurisation cabine. L'alignement ainsi calculé permet en vol de minimiser la traînée parasite qui serait formée par un décalage résiduel.

Ainsi, aucune partie de l'encadrement ne vient s'intercaler entre le fuselage et l'hublot : aucun interstice débouchant sur l'externe ne se forme entre l'encadrement et la peau de fuselage, et les couches de cuivre de canalisation de la foudre sur les encadrements de l'art antérieur deviennent alors inutiles. Un gain de masse et un gain sur le cout récurrent de l'encadrement est réalisé.

Une pièce de retenue 34 d'hublot est finalement fixée en une avancée médiane de l'encadrement vers l'intérieur du fuselage. Cette pièce de retenue 34, globalement en forme de couronne à l'image de la couronne interne 61 du joint 6 d'hublot, vient avantageusement finaliser le montage d'hublot 5 sur l'encadrement 20. Cette pièce de retenue 34 prend appui, en sa bordure centrale 34c, sur la couronne 61 du joint 6 et vient se fixer, en bordure périphérique 34p, sur l'extrémité Te du pied 21c de l'encadrement 20 formant l'avancée médiane. Cette fixation est réalisée par une double attache: une première vis V10 de solidarisation le long du pied 21c et une vis transversale V11 de fixation de cette attache V10 sur le pied 21c. Le bord périphérique 34p est relevé vers l'interne au-delà du pied 21c de l'encadrement 20. La pièce de retenue 34 est par exemple une tôle ou un matériau thermoplastique plié(e) selon la conformation souhaitée.

Avantageusement, le joint 6 d'hublot 5 s'étend latéralement en extension de la plaque interne 5i sous la forme d'un tore creux 6t à section sensiblement rectangulaire, entre l'hublot 5 et le pied 21c de l'encadrement 20. Cette extension peut servir de canal de condensation de l'eau d'infiltration et d'auto-centrage de l'hublot dans l'encadrement. Alternativement, une telle extension de joint peut être ajouté et collé au pied 21c de l'encadrement 20.

Dans une variante de réalisation, illustrée en figure 5, il sera noté que la couronne 21 est pourvue de nervures de renfort latérales 7 régulièrement réparties le long de l'encadrement 20, entre le pied 21c et la portion périphérique 21b. Ces nervures permettent de limiter le risque de dépliage de l'encadrement généré par les contraintes mécaniques.

Dans une autre variante de réalisation, il est également possible de prévoir la fabrication de plusieurs encadrements d'un seul tenant sous forme d'un bandeau sensiblement plat, apte à être co-collé à la peau du fuselage. Les encadrements de ces bandeaux sont préformés par formation des avancées 21c de type pied de « T » par des techniques de moulage ou de pré-tissage, respectivement de type RTM (initiales de « Resin Transfer Moulding », c'est-à-dire moulage de résine par transfert) ou LRI (initiales de « Liquid Resin Infusion », à savoir la fabrication de résines liquides par infusion). Afin de réduire le poids de tels bandeaux, il est possible de prévoir l'élimination de certaines zones entre les encadrements tout en maintenant la rigidité de l'ensemble.

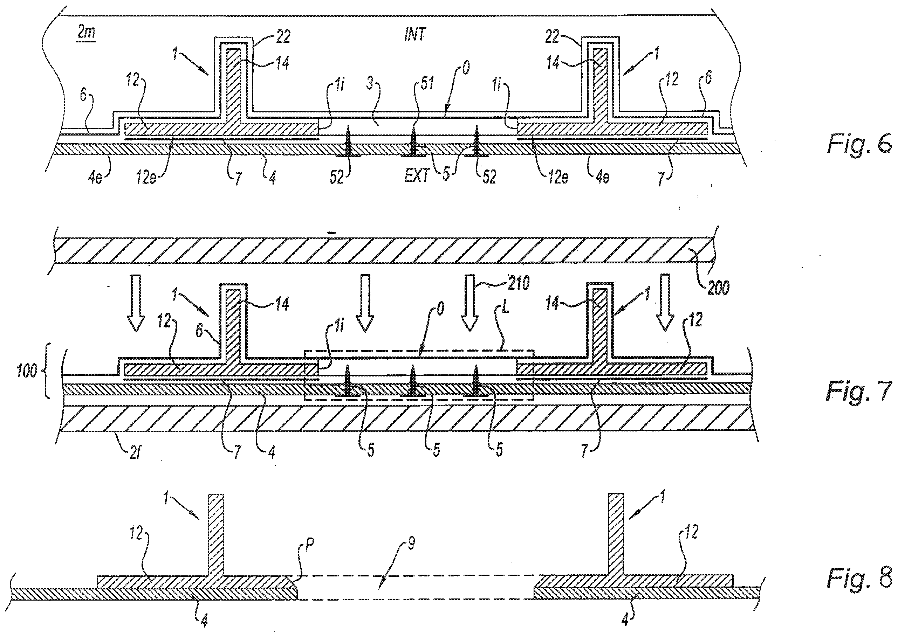

En référence à la figure 6 illustrant la phase de positionnement, chaque encadrement 1 est composé d'une couronne 12 et d'une avancée annulaire 14 qui est destiné à s'étendre dans l'espace interne INT du fuselage d'un aéronef.

Les encadrements ont donc un profil en « T » comme illustré en coupe sur la figure, qui montre également l'existence d'un orifice « O » bordé par l'encadrement 1 et qui apparaît entre les profils en « T » sur la vue en coupe de la figure 6. Les encadrements sont en matériau composite à base de fibres de carbone et sont précuits dans une phase de préparation antérieure.

Des gabarits en mousse de polyméthacrylimide 3 sont agencés dans les orifices « O » des encadrements 1, en appui contre le contour interne 1i des couronnes 12 définissant la limite des orifices. Alternativement, les gabarits peuvent être constitués en une mousse polymère de polyuréthane, de polyester, et de NBR

Ces gabarits forment des centreurs rigides, continus et complémentaires des contours internes des encadrements.

Les encadrements 1 et les gabarits 3 sont alors disposés dans un moule mâle 2m qui comporte des rainures annulaires 22 conformées pour accueillir les avancées annulaires 14 des encadrements 1. Un ensachage est préalablement effectué par la pose d'une fine enveloppe d'élastomère thermoplastique ou polyimide 6 sur l'ensemble des encadrements 1 et des gabarits 3, afin de faciliter le retrait ultérieur du moule mâle 2m et permettre l'application du cycle de pression sur l'assemblage encadrement/gabarit/peau de fuselage durant le cycle de cuisson ultérieur.

Dans cette phase de positionnement, un film de résine époxy 7 est appliqué sur la face 12e de la couronne 12, située du côté opposé aux avancées 14 c'est-à-dire, en d'autres termes, du côté externe EXT. La résine participe à la solidarisation des encadrements sur la peau du fuselage pendant le cycle de cocuisson de la phase de fixation ultérieure.

Une machine de placement de fibre dépose des couches de composite successives afin de constituer la peau de fuselage 4 par drapage en référence géométrique par rapport à des points de repérage disposés à la périphérie du moule mâle.

En fin de drapage de la peau 4, des harpons 5 sont implantés depuis la face externe 4e de la peau 4, par traversée de la peau 4 et pénétration dans le gabarit 3. Une liaison gabarit/peau est ainsi réalisée par accrochage du gabarit sur le support point par point. La position des harpons 5 est avantageusement ajustée par une assistance laser par projection du rayonnement laser sur les emplacements souhaités de la face 4e. Outre la technique d'harponnage, l'accrochage gabarit/peau peut être réalisé par agrafage, cloutage, crochetage ou équivalent.

Les harpons 5 ont une longueur limitée et une extrémité conique 51 de façon à ne pas endommager l'enveloppe d'ensachage 6. De plus, ces harpons 5 présentent une tête 52 suffisamment fine en épaisseur pour ne pas perturber la cocuisson pendant la phase de fixation ultérieure.

Pendant la phase de fixation, telle qu'illustrée par la vue en coupe partielle de la figure 7, l'ensemble encadrement/gabarit/peau 100 est introduit dans une enceinte d'autoclave 200 après transfert de cet ensemble sur un moule femelle 2f. L'enceinte 200 est réglée en température et pression 210 appropriées pour effectuer la cocuisson de la peau crue 4 sur les encadrements précuits 1, ainsi que le durcissement de la résine 7.

La position des encadrements 1 par rapport à la peau 4 reste figée par auto-centrage de ces encadrements sur les gabarits 3 liés à la peau 4 par les harpons 5. Le maintien en position de l'encadrement sur le support pendant la phase de fixation permet alors de minimiser l'intervalle de tolérance de position, par exemple de diviser par 4 cet intervalle de tolérance.

Dans la phase finale de découpage, des ouvertures d'hublot sont réalisées par découpage de l'assemblage encadrement 1 et peau 4 dans la zone limitée par la ligne « L » en traits pointillés ((figure 7). L'ensemble encadrements/peau est sorti de l'enceinte et démoulé.

En référence à la figure 8, le découpage de la peau 4 et de la couronne 12 de l'encadrement 1 par un outil de détourage fait apparaître une ouverture 9 apte à recevoir un hublot. Avantageusement, le détourage qui évide la peau du fuselage découpe également, simultanément, l'encadrement 1 selon un contour plus large que le contour interne 1i initial de la couronne 12 d'encadrement. Le profil « P » ainsi formé dans l'encadrement et la peau permet de définir l'ouverture 9 adaptée à celui du hublot à monter.

L'invention n'est pas limitée aux exemples de réalisation décrits et représentés. Par exemple les encadrements peuvent avoir des profils variés en forme de « L » ou de « C ».

En outre, la fixation de l'encadrement sur la peau de fuselage et de la pièce de retenue sur l'encadrement peut être réalisée par tout moyen adapté, avantageusement par vissage, rivetage, vissage excentrique, clipsage, emboutissage, etc.

De plus, l'invention s'applique à tout type d'encadrement de support, avec ou sans ouverture, que ce soit dans le domaine automobile, du bâtiment, du mobilier, de la décoration, etc.

## Revendications

1. Procédé d'assemblage d'encadrements sur un fuselage d'aéronef, dans lequel des éléments de fuselage comportant une peau de fuselage (30), présentant une face interne (30i) et une face externe (30e), des encadrements (20) et des lisses sont rassemblées dans une phase d'approvisionnement (100), la peau et les encadrements étant constitués en matériaux composites à base de fibres de carbone, **caractérisé en ce que**, chaque encadrement (20) présentant une paroi globalement en forme de couronne (21), un film de colle est injecté, dans une phase de préparation (200), en interface entre une face externe sensiblement plane (21e) de la couronne d'encadrement (21) et la face interne (30i) de la peau selon des emplacements prédéfinis, **en ce que** l'ensemble ainsi assemblé est introduit dans une enceinte pour effectuer une phase de co-collage (300) combinant le collage des encadrements et la cuisson de la peau de fuselage (30) dans des conditions de durée, de température et de pression déterminées, **en ce que**, au sortir du co-collage, une phase d'usinage (400) comporte la réalisation d'ouvertures (40) d'hublots (5) par découpage d'une portion annulaire (21a) de la couronne (21) formée par l'encadrement (20) et de la peau de fuselage (30) en regard liée à cette portion, selon un profil complémentaire de celui d'hublots à monter, puis par retrait de la matière découpée, et **en ce que**, dans une phase d'installation (500), les pièces d'encadrement (20) sont mécaniquement fixées à la peau de fuselage (30) en regard.

2. Procédé d'assemblage selon la revendication 1, l'encadrement (1) présentant une face (12e) de paroi (12) destinée à l'assemblage et un contour interne (1i) formé par cette paroi (12) qui définit un orifice (O), ce procédé comportant dans la phase de préparation (200) une phase de positionnement de l'encadrement (1) sur la peau de fuselage (30) comme support (4), suivie d'une phase de fixation de l'encadrement (1) sur ce support, ce procédé étant **caractérisé en ce que**, dans la phase de positionnement :
- l'encadrement (1) est placé dans un moule (2m) et un centreur (3) est inséré, en appui contre le contour interne (1i), dans l'orifice (O) de l'encadrement (1) fermé par le moule (2m) et un film d'adhésif (7) est appliqué sur la face (12e) d'encadrement destinée à l'assemblage ;
- le support (4) est mis en contact avec la face d'assemblage (12e) de l'encadrement (1) selon un emplacement référencé par le moule (2m) et le centreur (3) est alors mis en liaison avec le support (4),
et **en ce que**, dans la phase de fixation, pendant laquelle l'encadrement (1) est solidarisé au support au moins par le durcissement de l'adhésif (7), la position de l'encadrement (1) par rapport au support (4) reste figée par auto-centrage de l'encadrement (1) sur le centreur (3) lié au support (4).

3. Procédé d'assemblage selon la revendication précédente, dans lequel l'assemblage de l'encadrement (1) sur support (4) est soumis dans la phase de fixation à un apport d'énergie qui transforme le film d'adhésif (7) en un lien solidaire.

4. Procédé d'assemblage selon l'une des revendications 2 ou 3, dans lequel le centreur est formé par un gabarit (3) rigide, continu et complémentaire du contour interne (1i) de l'encadrement (1).

5. Procédé d'assemblage selon la revendication 4, dans lequel la liaison entre le gabarit (3) et le support (4) est réalisée par accrochage du gabarit (3) sur le support (4) point par point.

6. Procédé d'assemblage selon l'une quelconque des revendications précédentes, **caractérisé en ce qu'**un co-collage de lisses sur la peau du fuselage (30) est réalisé concomitamment avec le co-collage des encadrements (20), dans les mêmes conditions de durée, de température et de pression.

7. Procédé d'assemblage selon l'une quelconque des revendications précédentes, dans lequel le découpage des encadrements (20) et de la peau du fuselage (30) en regard est effectué par détourage.

8. Fuselage d'aéronef comportant une peau de fuselage (30), présentant une face interne (30i) et une face externe (30e), des encadrements (20) d'hublots (5) et des lisses en matériaux composites, les encadrements (20) présentant une paroi globalement en forme de couronne (21) ayant une face externe sensiblement plane (21e) collée sur la face interne (30i) de la peau, les encadrements étant liés mécaniquement (V5, V6) à la peau interne du fuselage (30i), **caractérisé en ce que** la peau de fuselage (30) est découpée selon un profil (30b) qui épouse celui (50) d'hublot (5) positionné en regard, les hublots (5) venant en appui direct sur la peau (30) à travers un joint de structure (6), et **en ce qu'**ils présentent en coupe une forme de « T », avec une barre (21) de « T » formant en développement la couronne de face externe (21e) et un pied (21c) de « T » formant une avancée médiane de l'encadrement (20) vers l'intérieur du fuselage (IN).

9. Fuselage d'aéronef selon la revendication 8, dans lequel des pièces de retenue (34) sont fixées sur les avancées médianes (21c) des encadrements (20) en prenant appui sur une portion de face interne (50i) d'hublot (5).

10. Fuselage d'aéronef selon la revendication 8 ou 9, dans lequel les hublots (5) et la peau de fuselage en regard présentent des profils (50, 30b) complémentaires choisis parmi des profils en biseau, concave/convexe, à angle droit selon une ou plusieurs marches, et une combinaison de ces profils.

11. Fuselage d'aéronef selon l'une quelconque des revendications 8 à 10, dans lequel les encadrements (20) sont fixés (V5, V6) en quinconce sur la peau interne (30i) en regard selon deux rangées de liaison mécanique entourant les hublots (5).

12. Fuselage d'aéronef selon l'une quelconque des revendications 8 à 11, dans lequel un joint torique creux (6t) est formé le long de la paroi latérale d'hublot, entre la pièce de retenue (34) et la portion centrale (21a) de l'encadrement. (20).

## Patentansprüche

1. Verfahren zum Zusammenfügen von Rahmen an einem Flugzeugrumpf, wobei Rumpfelemente, die eine Rumpfhaut (30) beinhalten, welche eine Innenfläche (30i) und eine Außenfläche (30e) aufweisen, Rahmen (20) und Stringer in einer Beschaffungsphase (100) zusammengefasst werden, wobei die Haut und die Rahmen aus Verbundmaterialien auf Basis von Kohlenstofffasern bestehen, **dadurch gekennzeichnet, dass**, da jeder Rahmen (20) eine allgemein kranzförmige Wand (21) aufweist, in einer Vorbereitungsphase (200) ein Kleberfilm an der Grenzfläche zwischen einer im Wesentlichen planen Außenfläche (21e) des Rahmenkranzes (21) und der Innenfläche (30i) der Haut gemäß vordefinierten Stellen eingespritzt wird, und dadurch, dass die so zusammengefügte Baugruppe in eine Kammer eingebracht wird, um eine Phase des gemeinsamen Verklebens (300) vorzunehmen, welche das Verkleben der Rahmen und das Brennen der Rumpfhaut (30) unter bestimmten Dauer-, Temperatur- und Druckbedingungen kombiniert, und dadurch, dass eine Zerspanungsphase (400) am Ende des gemeinsamen Verklebens das Ausführen von Bullaugen- (5) Öffnungen (40) durch Ausschneiden eines kreisförmigen Abschnitts (21a) aus dem vom Rahmen (20) gebildeten Kranz (21) und der mit diesem Abschnitt verbundenen gegenüberliegenden Rumpfhaut (30) gemäß einem Profil, das zu demjenigen der zu montierenden Bullaugen komplementär ist, und anschließend durch Entfernen des ausgeschnittenen Materials beinhaltet, und dadurch, dass in einer Installationsphase (500) die Rahmenteile (20) mechanisch an der gegenüberliegenden Rumpfhaut (30) befestigt werden.

2. Fügeverfahren nach Anspruch 1, wobei der Rahmen (1) eine zum Zusammenfügen vorgesehene Wand- (12) Fläche (12e) und eine von dieser Wand (12) gebildete Innenkontur (1i) aufweist, die ein Loch (O) definiert, wobei dieses Verfahren in der Vorbereitungsphase (200) eine Phase des Positionierens des Rahmens (1) als Träger (4) an der Rumpfhaut (30), gefolgt von einer Phase des Befestigens des Rahmens (1) an diesem Träger beinhaltet, wobei dieses Verfahren **dadurch gekennzeichnet ist, dass** in der Phase des Positionierens:
- der Rahmen (1) in einer Form (2m) platziert wird und eine Zentrierhilfe (3) in das von der Form (2m) geschlossene Loch (O) des Rahmens (1) in Anlage gegen die Innenkontur (1i) eingesetzt wird und ein Klebstofffilm (7) an der zum Zusammenfügen vorgesehenen Rahmenfläche (12e) aufgebracht wird;
- der Träger (4) gemäß einer von der Form (2m) referenzierten Stelle mit der Fügefläche (12e) des Rahmens (1) in Kontakt gebracht wird, und dann die Zentrierhilfe (3) mit dem Träger (4) in Verbindung gebracht wird,
und dadurch, dass in der Befestigungsphase, während der der Rahmen (1) mindestens durch das Aushärten des Klebstoffs (7) fest mit dem Träger verbunden wird, die Position des Rahmens (1) in Bezug auf den Träger (4) durch Selbstzentrierung des Rahmens (1) an der mit dem Träger (4) verbundenen Zentrierhilfe (3) fixiert bleibt.

3. Fügeverfahren nach dem vorstehenden Anspruch, wobei das Zusammenfügen des Rahmens (1) am Träger (4) in der Befestigungsphase einer Energiezufuhr unterworfen wird, die den Klebstofffilm (7) in eine feste Verbindung verwandelt.

4. Fügeverfahren nach einem der Ansprüche 2 oder 3, wobei die Zentrierhilfe von einer starren, durchgehenden und zur Innenkontur (1i) des Rahmens (1) komplementären Schablone (3) gebildet wird.

5. Fügeverfahren nach Anspruch 4, wobei die Verbindung zwischen der Schablone (3) und dem Träger (4) durch punktweises Verankern der Schablone (3) am Träger (4) ausgeführt wird.

6. Fügeverfahren nach einem der vorstehenden Ansprüche, **dadurch gekennzeichnet, dass** ein gemeinsames Verkleben von Stringern an der Haut des Rumpfes (30) gleichzeitig mit dem gemeinsamen Verkleben der Rahmen (20) unter denselben Dauer-, Temperatur- und Druckbedingungen ausgeführt wird.

7. Fügeverfahren nach einem der vorstehenden Ansprüche, wobei das Ausschneiden der Rahmen (20) und der gegenüberliegenden Haut des Rumpfes (30) durch Fräsen vorgenommen wird.

8. Flugzeugrumpf, der eine Rumpfhaut (30), welche eine Innenfläche (30i) und eine Außenfläche (30e) aufweist, Bullaugen- (5) Rahmen (20) und Stringer aus Verbundmaterialien beinhaltet, wobei die Rahmen (20) eine allgemein kranzförmige Wand (21) aufweisen, die eine im Wesentlichen plane Außenfläche (21e) aufweist, welche an die Innenfläche (30i) der Haut geklebt ist, wobei die Rahmen mechanisch (V5, V6) mit der Innenhaut des Rumpfes (30i) verbunden sind, **dadurch gekennzeichnet, dass** die Rumpfhaut (30) gemäß einem Profil (30b) ausgeschnitten ist, das sich demjenigen (50) des gegenüberliegend positionierten Bullauges (5) anformt, wobei die Bullaugen (5) über eine Strukturfuge (6) an der Haut (30) in direkte Anlage gehen, und dadurch, dass sie im Querschnitt eine "T"-Form aufweisen, wobei ein "T"-Balken (21) in der Entwicklung den Außenflächenkranz (21e) bildet, und ein "T"-Fuß (21c) einen mittleren Vorsprung des Rahmens (20) zur Innenseite des Rumpfes (IN) hin bildet.

9. Flugzeugrumpf nach Anspruch 8, wobei Rückhalteteile (34) an den mittleren Vorsprüngen (21c) der Rahmen (20) befestigt sind, indem sie an einem Bullaugen- (5) Innenflächenabschnitt (50i) Anlage nehmen.

10. Flugzeugrumpf nach Anspruch 8 oder 9, wobei die Bullaugen (5) und die gegenüberliegende Rumpfhaut komplementäre Profile (50, 30b) aufweisen, ausgewählt aus gefasten, konkaven/konvexen, gemäß einer oder mehreren Stufen rechtwinkligen Profilen, und einer Kombination dieser Profile.

11. Flugzeugrumpf nach einem der Ansprüche 8 bis 10, wobei die Rahmen (20) gemäß zwei mechanischen Verbindungsreihen, die die Bullaugen (5) umgeben, versetzt an der gegenüberliegenden Innenhaut (30i) befestigt (V5, V6) sind.

12. Flugzeugrumpf nach einem der Ansprüche 8 bis 11, wobei eine hohle ringförmige Dichtung (6t) entlang der Bullaugenseitenwand zwischen dem Rückhalteteil (34) und dem zentralen Abschnitt (21a) des Rahmens (20) gebildet ist.

## Claims

1. A method for assembling frames on a fuselage of an aircraft, wherein fuselage elements comprising a fuselage skin (30), presenting an internal side (30i) and an external side (30e), frames (20) and ribbands are assembled in an supply phase (100), the skin and the frames being made of composite materials based on carbon fibers, **characterized in that**, each frame (20) presenting a globally crown-shaped wall (21), a glue film is injected, in a preparation phase (200), on the interface between a substantially plan external side (21e) of the frame crown (21) and the internal side (30i) of the skin according to predefined places, **in that** the so-assembled unit is introduced into an enclosure to perform a co-gluing phase (300) combining the gluing of the frames and the fuselage skin (30) baking in determined conditions of time, temperature and pressure, **in that**, further to the co-gluing, a machining phase (400) comprises the formation of window (5) openings (40) by cutting an annular part (21a) of the crown (21) made by the frame (20) and the opposite fuselage skin (30) connected to this part, according to a profile being complementary of this of the windows to be mounted, and then by a withdrawal of the cut material, and **in that**, in an installation phase (500), the frame parts (20) are mechanically fastened to the opposite fuselage skin (30).

2. The assembling method according to claim 1, the frame (1) presenting a wall (12) side (12e) for the assembling and an internal contour (1i) formed by such wall (12) defining an orifice (O), such method comprising in the preparation phase (200) a frame (1) positioning phase on the fuselage skin (30) as a support (4), followed by a fastening phase of the frame (1) on said support, such method being **characterized in that**, in the positioning phase:
- the frame (1) is located in a mould (2m) and a centring unit (3) is inserted, in abutment against its internal contour (1i), into the frame (1) orifice (O) closed by the mould (2m), and an adhesive film (7) is applied onto the frame side (12e) adapted for the assembling;
- the support (4) is contacted with the assembling side (12e) of the frame (1) according to a place referenced by the mould (2m) and the centring unit (3) is then connected with the support (4),
and **in that**, in the fastening phase, during which the frame (1) is made integral with the support at least by the adhesive (7) curing, the position of the frame (1) relative to the support (4) stays stationary by an auto-centring of the frame (1) on the centring unit (3) connected to the support (4).

3. The assembling method according to preceding claim, wherein the frame (1)/support (4) assembling is subjected in the fastening phase to an energy addition converting the adhesive film (7) into an integral link.

4. The assembling method according to any of claims 2 or 3, wherein the centring unit is formed by a template (3) being rigid, continuous and complementary to the internal contour (1i) of the frame (1).

5. The assembling method according to claim 4, wherein the connection between the template (3) and the support (4) is made by catching the template (3) onto the support (4) point by point.

6. The assembling method according to any of preceding claims, **characterized in that** a co-gluing of ribbands on the fuselage skin (30) is made simultaneously with the co-gluing of the frames (20), in the same conditions of time, temperature and pressure.

7. The assembling method according to any of preceding claims, wherein the cutting of the frames (20) and the opposite fuselage skin (30) is carried out by clipping.

8. An aircraft fuselage comprising a fuselage skin (30), presenting an internal side (30i) and an external side (30e), window (5) frames (20) and ribbands in composite materials, the frames (20) presenting a globally crown-shaped wall (21) having a substantially plan external side (21e) glued onto the internal side (30i) of the skin, the frames being mechanically connected (V5, V6) to the internal skin of the fuselage (30i), **characterized in that** the fuselage skin (30) is cut according to a profile (30b) matching this (50) of the window (5) in the opposite position, the windows (5) then abutting directly on the skin (30) through a structural joint (6), and **in that** they present in section a "T" shape with a "T" bar (21) forming in a development the external crown side (21e) and a "T" root (21c) forming a median projection of the frame (20) towards the inside of the fuselage (IN).

9. The aircraft fuselage according to claim 8, wherein holding parts (34) are fastened onto the median projections (21c) of the frames (20) abutting onto an internal side portion (50i) of a window (5).

10. The aircraft fuselage according to claim 8 or 9, wherein the windows (5) and the opposite fuselage skin present complementary profiles (50, 30b) selected amongst bevelled profiles, concave/convex, at right angle according to one or more steps, and a combination of such profiles.

11. The aircraft fuselage according to any of claims 8 to 10, wherein the frames (20) are fastened (V5, V6) in a staggered arrangement onto the opposite internal skin (30i) according to two mechanical connection rows surrounding the windows (5).

12. The aircraft fuselage according to any of claims 8 to 11, wherein a hollow O-ring joint (6t) is formed along the window lateral wall between the holding part (34) and the central portion (21a) of the frame (20).
